# EUROPÄISCHE PATENTSCHRIFT

(11) **EP 0 416 360 B1**
(45) Veröffentlichungstag und Bekanntmachung des Hinweises auf die Patenterteilung: **21.09.1994**
(21) Anmeldenummer: 90115965.7
(22) Anmeldetag: 21.08.1990
(51) Int. Cl.: C08F 8/32

(54) **Sekundäre Aminogruppen aufweisende Copolymerisate, ein Verfahren zu ihrer Herstellung und ihre Verwendung als Bindemittel oder Bindemittelkomponente**
Copolymers containing secondary amino groups, process for their manufacture and their use as a binder or a binder-component
Copolymères contenant des groupes aminés secondaires, leur procédé de préparation et leur utilisation comme liants ou composants de liant

(30) Priorität: 02.09.1989 DE 3929163
(43) Veröffentlichungstag der Anmeldung: 13.03.1991
(73) Patentinhaber: BAYER AG, 51368 Leverkusen (DE)
(72) Erfinder: Blum, Harald, Dr., D-4175 Wachtendonk 1 (DE); Pedain, Josef, Dr., D-5000 Köln 80 (DE); Wamprecht, Christian, Dr., D-4040 Neuss 22 (DE)

(56) Entgegenhaltungen:
- EP-A- 0 112 195
- DE-A- 1 570 594
- FR-A- 2 528 067
- GB-A- 2 080 313
- US-A- 3 810 276
- US-A- 3 998 994

## Beschreibung

Die vorliegende Erfindung betrifft Copolymerisate, die neben einer cyclischen Imidstruktureinheit sekundäre, sterisch im wesentlichen ungehinderte Aminogruppen enthalten, ein Verfahren zur Herstellung solcher Produkte und ihre Verwendung als Bindemittel oder Bindemittelkomponente in Beschichtungsmitteln, Dichtmassen, Klebstoffen oder Druckfarben. Die Herstellung der modifizierten Copolymerisate erfolgt durch Umsetzung von intramolekularen Carbonsäureanhydridgruppen, insbesondere eingebaute Maleinsäureanhydridgruppen aufweisenden Copolymerisaten mit bestimmten primär-sekundären Diaminen.

Bislang war man der Ansicht, daß die Umsetzung zwischen Polyanhydriden und Diaminen mit primären bzw. sekundären, sterisch ungehinderten Aminogruppen im allgemeinen unter Ausbildung von Polyimiden bzw. Polyamiden zu vernetzten Produkten führt (vgl. z.B. die diesbezüglichen Ausführungen in DE-OS 30 24 525). In dieser Vorveröffentlichung werden anhydridfunktionelle Polymerisate beschrieben, deren Anhydridgruppe zu 67 bis 95 % mit 4-Amino-2,2,6,6-tetramethylpiperidin imidiert sind. Gemäß DE-OS 30 24 525 soll in diesem Molekül die sekundäre Aminogruppe sterisch so abgeschirmt sein, daß sie nur schwer mit Anhydriden reagiert und deshalb bei der Umsetzung von 4-Amino-2,2,6,6-tetramethylpiperidin mit Polyanhydriden nur die primäre Aminogruppe zum cyclischen Imid reagiert.

Auch die Umsetzung von Polymerisaten und Copolymerisaten des Maleinsäureanhydrids mit Diaminen, die neben einer tertiären Aminogruppe eine primäre oder sekundäre Aminogruppe aufweisen ist bekannt (DE-OS 1 570 594). Hier erfolgt die Umsetzung zwecks Einführung von tert. Aminogruppen, die eine Löslichkeit der Polymerisate bzw. Copolymerisate in wäßrigen Säuren zur Folge hat. Da in den Diaminen nur eine reaktive Aminogruppe vorliegt, können selbstverständlich Vernetzungsreaktionen während der Modifizierung nicht stattfinden.

Überraschenderweise wurde jetzt gefunden, daß wertvolle Bindemittel oder Bindemittelkomponenten für Beschichtungsmittel, Dichtmassen, Klebstoffe oder Druckfarben mit sekundären Aminogruppen durch Umsetzung von speziellen Maleinsäureanhydridcopolymerisaten mit Diaminen, deren sekundäre Aminogruppen sterisch nicht oder nur unwesentlich abgeschirmt sind, erhalten werden können.

Die EP-A-0 112 195 beschreibt zwar bereits die Umsetzung von Maleinsäureanhydridgruppen aufweisenden Copolymerisaten mit primär/sekundären Diaminen, jedoch handelt es sich bei den dabei eingesetzten Copolymerisaten um solche, die einen hohen Anteil an linearen Olefinen mit mindestens 16 Kohlenstoffatomen einpolymerisiert enthalten, so daß die Umsetzungsprodukte als Mineralöl-Additiv Verwendung finden können. Von Beschichtungsmitteln, Dichtmassen, Klebstoffen oder Druckfarben ist demzufolge in dieser Vorveröffentlichung nicht die Rede.

Gegenstand der Erfindung sind sekundäre Aminogruppen aufweisende Copolymerisate von olefinisch ungesättigten Verbindungen des Molekulargewichtsbereichs Mn 600 bis 20 000, gekennzeichnet durch einen Gehalt an sekundären Aminogruppen -NH- von 0,1 bis 6,0 Gew.-% in Form von in die Polymerkette eingebauten Struktureinheiten der Formel (I) 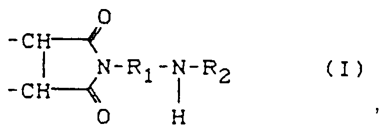
dadurch gekennzeichnet, daß sie durch Umsetzung von in der Polymerkette eingebaute intramolekulare Säureanhydridgruppen der Formel (III) 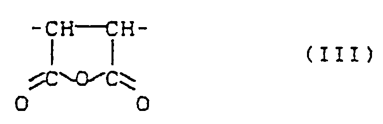
aufweisenden Copolymerisaten des Molekulargewichtsbereichs Mn 500 bis 18 000 eines Gemischs olefinisch ungesättigter Monomerer, bestehend aus
a) 1 bis 50 Gew.-Teilen anhydridfunktioneller Monomerer,
b) 1 bis 75 Gew.-Teilen Monomerer der Formel (IV) 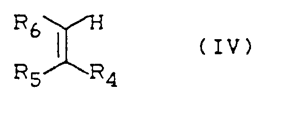
c) 15 bis 98 Gew.-Teilen Monomerer der Formel (V) 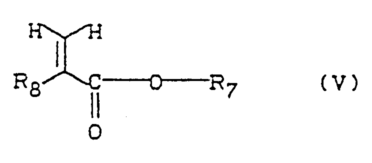 und
d) 0 bis 15 Gew.-Teilen mehrfach olefinisch ungesättigter Monomerer,
mit primär-sekundären Diaminen der Formel (VI)

H₂N-R₁-NH-R₂ (VI)

oder Gemischen derartiger Diamine mit bis zu 50 Mol-%, bezogen auf Gemisch, an Aminoalkoholen der Formel (VII)

H₂N-R₃-OH (VII)

unter Imidbildung bei 100 bis 200° C unter Einhaltung eines Äquivalentverhältnisses von primären Aminogruppen zu Säureanhydridgruppen von 1 : 1 bis 2 : 1 erhältlich sind, wobei
- R₁: für einen gesättigten aliphatischen Kohlenwasserstoffrest mit 2 bis 6 Kohlenstoffatomen steht, mit der Maßgabe, daß zwischen den beiden Stickstoffatomen mindestens 2 Kohlenstoffatome angeordnet sind,
- R₂: für eine Methyl-, Ethyl- oder 2-Hydroxyethylgruppe steht,
- R₃: für einen gesättigten Kohlenwasserstoffrest mit 2 bis 6 Kohlenstoffatomen steht.
- R₄: für Wasserstoff, eine Methylgruppe oder für Chlor oder Fluor steht,
- R₅: für einen aromatischen Kohlenwasserstoffrest mit 6 bis 12 Kohlenstoffatomen, Chlor, Fluor oder eine Nitrilgruppe steht oder zusammen mit R₆ und den beiden Kohlenstoffatomen einen olefinisch ungesättigten cycloaliphatischen Kohlenwasserstoffring mit 5 oder 6 Kohlenstoffatomen bildet,
- R₆: für Wasserstoff steht oder zusammen mit R₅ und den beiden Kohlenstoffatomen einen olefinisch ungesättigten cycloaliphatischen Kohlenwasserstoffring mit 5 oder 6 Kohlenstoffatomen bildet,
- R₇: für einen aliphatischen oder cycloaliphatischen, gegebenenfalls Sauerstoff oder Stickstoff als Heteroatome enthaltenden Kohlenwasserstoffrest mit 1 bis 18 Kohlenstoffatomen steht, der gegebenenfalls Hydroxylgruppen als Substituenten aufweisen kann und
- R₈: für Wasserstoff oder eine Methylgruppe steht.

Gegenstand der Erfindung ist auch ein Verfahren zur Herstellung dieser Aminogruppen aufweisenden Copolymerisate, welches dadurch gekennzeichnet ist, daß man in der Polymerkette eingebaute intramolekulare Säureanhydridgruppen der Formel (III) 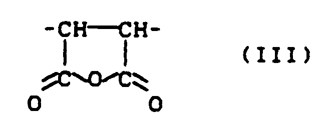
aufweisende Copolymerisate des Molekulargewichtsbereichs Mn 500 bis 18 000 eines Gemischs olefinisch ungesättigter Monomerer, bestehend aus
a) 1 bis 50 Gew.-Teilen anhydridfunktioneller Monomerer,
b) 1 bis 75 Gew.-Teilen Monomerer der Formel (IV) 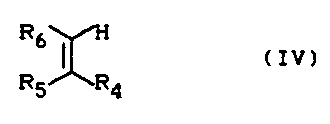
c) 15 bis 98 Gew.-Teilen Monomerer der Formel (V) 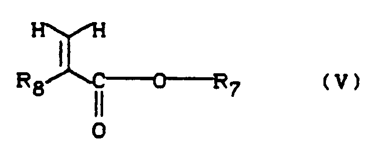 und
d) 0 bis 15 Gew.-Teilen mehrfach olefinisch ungesättigter Monomerer,
mit primär-sekundären Diaminen der Formel (VI)

H₂N-R₁-NH-R₂ (VI)

oder Gemischen derartiger Diamine mit bis zu 50 Mol-%, bezogen auf Gemisch, an Aminoalkoholen der Formel (VII)

H₂N-R₃-OH (VII)

unter Imidbildung bei 100 bis 200°C zur Reaktion bringt und gleichzeitig und/oder anschließend das Reaktionswasser azeotrop abdestilliert, wobei
das Äquivalentverhältnis von primären Aminogruppen zu Säureanhydridgruppen bei 1:1 bis 2:1 gehalten wird, wobei R₁ bis R₈ die bereits oben genannte Bedeutung haben.

Gegenstand der Erfindung ist schließlich auch die Verwendung der neuen Copolymerisate als Bindemittel oder Bindemittelkomponente für Beschichtungsmittel, Dichtmassen, Klebstoffen oder Druckfarben.

Die neuen, sekundäre Aminogruppen aufweisenden Copolymerisate weisen ein nach der Methode der Gelpermeationschromatographie unter Verwendung von Polystyrol als Standard ermittelbares, als Zahlenmittel bestimmtes Molekulargewicht Mn von 600 bis 20 000, vorzugsweise 1600 bis 7000, einen Gehalt an sekundären Aminogruppen (berechnet als -NH-, Molekulargewicht = 15) in Form von Struktureinheiten der obengenannten allgemeinen Formel (I) von 0,1 bis 6,0, vorzugsweise 0,5 bis 3,0 Gew.% und gegebenenfalls einen Gehalt an Hydroxylgruppen in Form von Struktureinheiten der Formel (II) 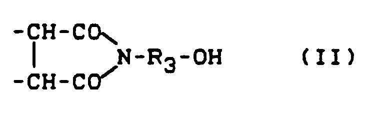
von 0 bis 4,5, vorzugsweise 0,1 bis 2,5 Gew.-% auf.

Die Herstellung der sekundäre Aminogruppen aufweisenden Copolymerisate erfolgt vorzugsweise nach dem erfindungsgemäßen Verfahren durch Umsetzung von analoger, in die Polymerkette eingebaute intramolekulare Säureanhydridgruppen der Formel (III) aufweisenden Copolymerisaten mit speziellen primären/sekundären Diaminen der Formel (VI), die gegebenenfalls in Abmischung mit Aminoalkoholen der Formel (VII) zum Einsatz gelangen.

Die beim erfindungsgemäßen Verfahren eingesetzten, intramolekulare Carbonsäureanhydridgruppen aufweisenden Copolymerisate weisen ein nach der Methode der Gelpermeationschromatographie unter Verwendung von Polystyrol als Standard ermittelbares, als Zahlenmittel bestimmtes Molekulargewicht Mn von 500 bis 18 000, vorzugsweise 1000 bis 15 000 und ganz besonders bevorzugt von 1500 bis 6000 auf. Ihr Anhydridäquivalentgewicht (Menge in "g" die 1 Mol Anhydridgruppen enthält) liegt bei 196 bis 9800, vorzugsweise bei 245 bis 1960 und besonders bevorzugt bei 392 bis 980.

Es handelt sich bei diesen Copolymerisaten um solche aus
a) 1 bis 50, vorzugsweise 5 bis 40 und besonders bevorzugt 10 bis 25 Gew.-Teilen anhydridfunktioneller Monomerer,
b) 1 bis 75, vorzugsweise 3 bis 60 und besonders bevorzugt 5 bis 50 Gew.-Teilen Monomerer der bereits obengenannten Formel (IV),
c) 15 bis 98, vorzugsweise 25 bis 85 und besonders bevorzugt 30 bis 75 Gew.-Teilen Monomerer der bereits obengenannten Formel (V) und
d) 0 bis 15, vorzugsweise 0 bis 5 Gew.-Teilen mehrfach olefinisch ungesättigter Monomerer der weiter unten beispielhaft genannten Art.

Geeignete bzw. bevorzugte Monomere a) sind Maleinsäureanhydrid, Itaconsäureanhydrid, Citraconsäureanhydrid, wobei Maleinsäureanhydrid besonders bevorzugt ist.

Geeignete Monomere b) sind solche der bereits obengenannten allgemeinen Formel (IV) mit der bereits oben gemachten Definition für die Reste R₄, R₅ und R₆. Bevorzugte Monomere b) sind jedoch solche der genannten allgemeinen Formel (IV), für welche
- R₄: für Wasserstoff oder eine Methylgruppe steht,
- R₅: für einen Phenylrest steht, und
- R₆: für Wasserstoff steht.

Geeignete bzw. bevorzugte Monomere b) sind z.B. Styrol, Vinyltoluol, α-Methylstyrol, α-Ethylstyrol, Ethylvinylether, n-Propylvinylether, Isopropylvinylether, n-Butylvinylether, Isobutylvinylether, Vinylacetat, Vinylpropionat, Vinylbutyrat, 1-Octen, 1-Decen, 1-Hexen, Vinylcyclohexen, Cycloocten und beliebige Gemische dieser Monomeren.

Geeignete Monomere c) sind Verbindungen der bereits obengenannten allgemeinen Formel (V) mit der bereits oben gemachten Definition von R₇ und R₈. Zu den bevorzugten Monomeren c) gehören Verbindungen der allgemeinen Formel (V), für welche
- R₇: für einen aliphatischen Kohlenwasserstoffrest mit 1 bis 18 Kohlenstoffatomen steht, und
- R₈: für Wasserstoff oder eine Methylgruppe steht.

Geeignete bzw. bevorzugte Monomere c) sind z.B. Methylmethacrylat, Ethylacrylat, Ethylmethacrylat, n-Butylacrylat, n-Butylmethacrylat, iso-Butylacrylat, iso-Butylmethacrylat, 2-Ethylhexylacrylat, 2-Ethylhexylmethacrylat, Octylacrylat, Octylmethacrylat, Laurylacrylat, Laurylmethacrylat, Dodecylacrylat, Dodecylmethacrylat, Cyclohexylacrylat, 2,2,3,3-Tetrafluorpropylmethacrylat und beliebige Gemische dieser Monomeren, oder auch Hydroxylgruppen aufweisende Monomere wie Hydroxyethyl-, Hydroxypropyl- oder Hydroxybutyl(meth)acrylat, die in Mengen von bis zu 15 Gew-%, bezogen auf das Gewicht aller Monomerer mitverwendet werden können.

Geeignete bzw. bevorzugte Monomere d) sind z.B. Hexandiolbisacrylsäureester, Trimethylolpropantrisacrylsäureester, Pentaerythrittrisacrylsäureester, Neopentylglykolbisacrylsäureester, Divinylbenzol.

Die anhydridfunktionellen Copolymerisate werden in an sich bekannter Weise durch eine radikalisch initiierte Copolymerisation, vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Geeignet sind beispielsweise Ester wie Butylacetat, Isobutylacetat, sec.-Butylacetat, Amylacetat, Hexylacetat, Benzylacetat, Ethoxypropylacetat, Propylenglykolmethyletheracetat, Oxohexylacetat (®Exxate 600), Oxoheptylacetat (®Exxate 700), z.B. Ether wie Dibutylether, Dioxan, Dimethyldiglykol, Kohlenwasserstoffe wie Benzin, Terpentinöl, Solventnaphtha, Terpene, Toluol, Xylol, Ethylbenzol, Ketone wie Methylisobutylketon, Methyl-n-amylketon, Methylisoamylketon, Diethylketon, Ethylbutylketon, Diisopropylketon, Cyclohexanon oder beliebige Gemische derartiger Lösemittel.

Bevorzugt sind solche Lösemittel, deren Siedepunkt bei Normalbedingungen ≧110°C beträgt und solche Lösungsmittel, die mit Wasser ein Azeotrop bilden wie z.B. Xylol, Butylacetat, Solventnaphtha, Oxohexylacetat.

Die Copolymerisation wird üblicherweise bei Festgehalten von 30 bis 95 Gew.-% und unter Inertgas wie z.B. N₂ durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 % beendet.

Gegebenenfalls ist es erforderlich durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Restmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator zu reduzieren.

Es ist auch möglich, einen Teil der anhydridfunktionellen Monomeren mit dem Lösungsmittel vorzulegen, oder das anhydridfunktionelle Monomer schneller als die anderen Monomeren zuzudosieren. Diese geänderten Herstellverfahren können in gewissen Fällen die Verträglichkeit bzw. andere Eigenschaften der Bindemittel verbessern.

Der Monomerenumsatz wird durch eine Bestimmung des Festgehaltes der Reaktionsmischung ermittelt, und durch eine gaschromatographische Restmonomeranalyse überprüft.

Vorzugsweise werden solche Radikalbildner eingesetzt, die für Reaktionstemperaturen von 60 bis 180°C geeignet sind, wie organische Peroxide, z.B.: Dibenzoylperoxid, Di-tert.-butylperoxid, Dilaurylperoxid, tert.-Butylperoctoat, tert.-Butylperoxymaleinat, tert.-Butylperoxybenzoat, Dicumylperoxid, Didecanoylperoxid, wie Azoverbindungen, z.B. 2,2′-Azobis-(2,4-dimethylvaleronnitril), 2,2′-Azobis(isobutyronitril), 2,2′-Azobis-(2,3-dimethylbutyronitril), 1,1′-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan usw. in Mengen von 0 bis 10 Gew.-% eingesetzt werden.

Zur Durchführung des erfindungsgemäßen Verfahrens werden die in den Copolymerisaten vorliegenden Anhydridgruppen in Imidgruppen überführt. Dies geschieht vorzugsweise in 10- bis 80-gew.-%iger organischer Lösung in einem Lösungsmittel der bereits oben beispielhaft genannten Art durch Umsetzung mit Diaminen der bereits obengenannten allgemeinen Formel (VI) oder mit Gemischen aus derartigen Diaminen mit Aminoalkoholen der bereits obengenannten Formel (VII), wobei in diesen Gemischen bis zu 50 Mol-%, bezogen auf das Gemisch, an Aminoalkoholen (VII) vorliegen können.

Geeignete Diamine der Formel (VI) sind beispielsweise 2-Amino-1-methylaminoethan, 2-Amino-1-(ethylamino)-ethan, 2-Amino-1-[(2-hydroxyethyl)amino]-ethan, 3-Amino-1-(methylamino)-propan, 3-Amino-1-(ethylamino)-propan, 3-Amino-1-[(2-hydroxyethyl)amino]-propan, 4-Amino-1-(methylamino)-butan, 4-Amino-1-(ethylamino)-butan, 4-Amino-1-[(2-hydroxyethyl)amino]-butan, 6-Amino-1-(methylamino)-hexan, 6-Amino-1-(ethylamino)-hexan, 6-Amino-1-[(2-hydroxyethyl)amino]-hexan.

Bevorzugte Diamine sind 1-Amino-3-(methylamino)-propan und 2-Amino-1-[(2-hydroxyethyl)-amino]-ethan.

Geeignete Aminoalkohole sind beispielsweise 2-Aminoethanol, 3-Aminopropanol, 2-Aminopropanol oder 1-Amino-2-propanol.

Zur Durchführung des erfindungsgemäßen Verfahrens werden die Diamine (VI) und gegebenenfalls Aminoalkohole (VII) in solchen Mengen eingesetzt, die einem Äquivalentverhältnis von primären Aminogruppen zu Säureanhydridgruppen von 1:1 bis 2:1, vorzugsweise 1:1 bis 1,5:1 und besonders bevorzugt von 1:1 bis 1,2:1 entsprechen.

Vorzugsweise wird zur Durchführung des erfindungsgemäßen Verfahrens die Amin-Komponente (Aminkomponente = Diamin oder dessen Gemisch mit Aminoalkohol) in einem geeigneten Lösungsmittel der bereits beispielhaft genannten Art gelöst, diese Lösung vorgelegt, auf Temperaturen von oberhalb 60°C, vorzugsweise von mindestens 100°C erhitzt und dann unter Aufrechterhaltung einer Reaktionstemperatur von 60 bis 200°C, vorzugsweise 100 bis 150°C das vorzugsweise ebenfalls als Lösung in einem Lösungsmittel der bereits beispielhaft genannten Art vorliegende anhydridfunktionelle Copolymerisat zudosiert. Dabei kann die Reaktionsführung so gewählt werden, daß parallel zur Zugabe des Polymerisats das Reaktionswasser am Wasserabscheider azeotrop abdestilliert wird. Nach einer Verfahrensvariante kann auch zunächst die ganze Menge anhydridfunktionelles Copolymerisat zugegeben und im Anschluß daran das Reaktionswasser abgespalten werden.

Die Wasserabspaltung wird bei 60 bis 200°C, bevorzugt bei 100 bis 150°C so lange durchgeführt, bis entweder die theoretische Wassermenge abgespalten ist, oder kein Wasser mehr abgespalten wird. Die Wasserabspaltung kann durch einen Inertgasstrom, z.B. N₂, der entweder durch die Reaktionsmischung geleitet oder übergeleitet wird, beschleunigt werden. Die Imidierungsreaktion wird so lange durchgeführt, bis die Endprodukte Säurezahlen <25, bevorzugt ≦15 und besonders bevorzugt ≦10 aufweisen (jeweils bezogen auf 100 %iges Polymer). Alle Angaben bezüglich der Säurezahl beziehen sich stets auf Feststoff und umfassen alle Säureanhydrid-, freien Carboxyl- und in Form von Aminsalzen vorliegenden Carboxylatgruppen, die tritrimetrisch mit KOH erfaßt werden können.

Um besonders niedrige Säurezahlen zu erhalten, kann es unter bestimmten Bedingungen angebracht sein, gegen Reaktiosende nochmals geringe Mengen, etwa 0,05 bis 0,2 Äquivalente Diamin zuzusetzen, um z.B. Verluste durch azeotrope Destillation zu ersetzen.

Die Molekulargewichte Mn der aminofunktionellen Polyimidcopolymerisate entsprechen in etwa den durch Gelpermeationschromatographie ermittelten Molekulargewichten Mn der anhydridfunktionellen Copolymerisate, erhöht um das berechnete Molekulargewicht der eingesetzten Diamine und gegebenenfalls Aminoalkohole, abzüglich der abgespaltenen Wassermenge.

Beim Vermischen von anhydridfunktionellen Copolymerisaten und Diaminen können in Abhängigkeit von den Reaktionsbedingungen hochviskose Zwischenprodukte entstehen, insbesondere dann, wenn anhydridfunktionelle Copolymerisate mit hohem Molekulargewicht und/oder hohem Anhydridäquivalentgewicht eingesetzt werden. In diesen Fällen kann es angebracht sein, die Konzentration der Reaktionsprodukte in niedrigem Bereich zu halten. Im Verlaufe der Umsetzung fällt die Viskosität solcher Produkte jedoch wieder auf niedrigeres Niveau ab. Die Produkte bleiben dabei stets rührfähig.

Nach Abschluß der Imidierungsreaktion kann, falls erforderlich, überschüssiges Diamin, z.B. azeotrop mit einem geeigneten Lösungsmittel wie z.B. Xylol, Butylacetat, Solvent Naphtha, Oxohexylacetat, durch kurzes Andestillieren aus dem Endprodukt entfernt werden.

Die erfindungsgemäßen, aminofunktionellen Polyimidcopolymerisate sind gut lösliche Polymere mit unter 25 liegenden Säurezahlen. Sie eignen sich sehr gut als Bindemittel oder Bindemittelkomponente für Beschichtungsmittel, Dichtmassen, Klebstoffe oder Druckfarben. Vorzugsweise werden sie als Zweikomponenten-Systeme in Kombination mit geeigneten Härtern verarbeitet. Geeignete Härter für die erfindungsgemäßen, Aminogruppen aufweisenden Copolymerisate sind beispielsweise Organische Polyisocyanate, Polyepoxide, Melaminharze oder olefinisch ungesättigte Vernetzer wie beispielsweise acryloylfunktionelle Copolymerisate oder Veresterungsprodukte der Acrylsäure mit mehrwertigen Alkoholen, die nach dem Michael-Reaktionsprinzip reagieren können.

In den nachfolgenden Beispielen beziehen sich alle Angaben in "Teilen" und "Prozent" auf das Gewicht, falls nicht ausdrücklich etwas anderes vermerkt ist.

### Beispiel 1

a) In einem 4-l-Dreihalskolben mit Rühr-, Kühl- und Heizvorrichtung werden unter N₂-Atmosphäre 1602 g Xylol auf 120°C aufgeheizt. Eine Mischung aus 300 g Maleinsäureanhydrid, 600 g n-Butylacrylat, 420 g 2-Ethylhexylmethacrylat und 600 g Xylol wird in 3 Stunden und parallel dazu 114 g tert.-Butylperoctoat (70 %ig in Kohlenwasserstoffen gelöst) in 3,5 Stunden zudosiert. Anschließend wird noch 2 Stunden bei 130°C gerührt. Man erhält ein anhydridfunktionelles Copolymerisat als 55 %ige Lösung. Das Molekulargewicht Mn ist 3800, das Anhydridäquivalentgewicht 653 (100 %ig).
b) In einem 0,5-l-Dreihalskolben mit Rühr-, Kühl- und Heizvorrichtung sowie einem Wasserabscheider werden 20,4 g (1,1 Äquivalente) 1-Amino-3-(methylamino)-propan und 80,5 g Xylol eingewogen und auf 120°C erhitzt. 250 g Polymerisat 1a) (1,0 Äquivalente) werden in einer Stunde zudosiert. Nach Zugabe von 100 g Xylol wird solange am Wasserabscheider erhitzt, bis kein Wasser mehr abgespalten wird. Durch Abdestillieren von Schleppmittel wird dabei die Reaktionstemperatur bis auf 140°C gesteigert, dabei wird auch das überschüssige 1-Amino-3-methyl-aminopropan abdestilliert. Man erhält das Polyimidcopolymerisat 1b) als 49 %ige Lösung. Die Säurezahl beträgt ca. 3. Das 100 %ige Polymer enthält 1,3 Gew.-% sekundäre Aminogruppen -NH in Form von Struktureinheiten der Formel

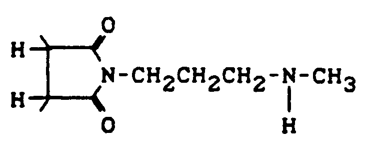

### Beispiel 2

a) In einem 4-l-Reaktionsgefäß mit Rühr-, Kühl- und Heizvorrichtung werden 1333 g Solvent Naphtha (Kohlenwasserstoffgemisch, Siedebereich 165-180°C) auf 147°C erhitzt. Eine Mischung aus 200 g Maleinsäureanhydrid, 500 g Methylmethacrylat, 600 g n-Butylacrylat und 600 g Styrol wird in 3 Stunden und parallel dazu 100 g Di-tert.-butylperoxid in 3,5 Stunden zudosiert Nach weiteren 1,5 Stunden Rühren bei 145°C erhält man das anhydridfunktionelle Copolymerisat 2a) als 60 %ige Lösung. Das Molekulargewicht Mn beträgt 2200, das Anhydridäquivalentgewicht 980 (100 %ig).
b) In einem 0,5-l-Reaktionsgefäß mit Rühr-, Kühl- und Heizvorrichtung werden 133,5 g Solvent Naphtha und 21,4 g 1-Amino-2-[(2-hydroxyethyl)amino]-ethan (1,1 Äquivalente) und 300 g anhydridfunktionelles Copolymerisat 2a) (1,0 Äquivalente) wie unter 1b) beschrieben umgesetzt. Man erhält das Polyimidcopolymerisat 2b) als 45 %ige Lösung. Die Säurezahl beträgt ca. 4. Das 100 %ige Polymer enthält 1,4 Gew.-% sekundäre Aminogruppen -NH in Form von Struktureinheiten der Formel

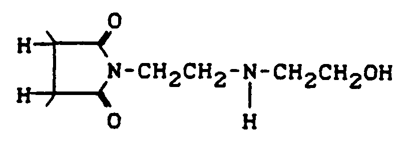

### Beispiel 3

a) In einem 5-l-Reaktionsgefäß mit Rühr-, Kühl- und Heizvorrichtung werden 1667 g Oxohexylacetat (Exxate 600) auf 148°C erhitzt. Eine Mischung aus 375 g Maleinsäureanhydrid, 750 g Butylacrylat, 300 g Methylmethacrylat und 950 g Styrol wird in 3 Stunden und parallel dazu 125 g Di-tert.-butylperoxid in 3,5 Stunden zudosiert Nach 2 Stunden Rühren erhält man das anhydridfunktionelle Copolymerisat 3a) als 60 %ige Lösung. Das Molekulargewicht Mn beträgt 2900, das Anhydridäquivalentgewicht 653 (100 %ig).
b) Wie unter 1b) beschrieben, werden 52,8 g 1-Amino-2-[(2-hydroxyethyl)amino]-ethan (1,1 Äquivalente), 234,5 g Exxate 600 und 500 g (1,0 Äquivalente) Copolymerisat 3a) zur Reaktion gebracht. Man erhält das Polyimidpolymerisat 3b) als 46 %ige Lösung. Die Säurezahl beträgt ca 2. Das 100 %ige Polymer enthält 2,0 Gew.-% sekundäre Aminogruppen -NH- in Form der in Beispiel 2 genannten Struktureinheit.

### Beispiel 4

Nach den in Beispiel 1b) beschriebenen Verfahren werden 18,1 g (1,1 Äquivalente) 3-Amino-1-(methylamino)-propan, 185 g Solvent Naphtha und 300 g (1,0 Äquivalente) anhydridfunktionelles Copolymer 2a) umgesetzt. Man erhält das Polyimidcopolymer 4b) als 52 %ige Lösung. Die Säurezahl beträgt ca. 5. Das 100 %ige Polymer enthält 1,4 Gew.-% sekundäre Aminogruppen -NH- der in Beispiel 1 genannten Struktureinheit.

### Beispiel 5

a) In einem 4-l-Reaktionsgefäß mit Rühr-, Kühl- und Heizvorrichtung werden 1002 g Xylol auf 120°C erhitzt. Eine Mischung aus 600 g Xylol, 460 g Maleinsäureanhydrid, 1000 g 2-Ethylhexylacrylat und 460 g Styrol wird in 3 Stunden und parallel dazu 114 g tert.-Butylperoctoat (70 %ig) in 3,5 Stunden zudosiert. Nach weiteren 2 Stunden Rühren erhält man ein 55 %iges Copolymerisat 5a), welches mit Xylol auf 50 % verdünnt wird. Das Molekulargewicht Mn ist 2500, das Anhydridäquivalentgewicht beträgt 426 (100 %ig).
b) Nach dem in Beispiel 1b) beschriebenen Verfahren werden 45,4 g 3-Amino-1-(methylamino)-propan (1,1 Äquivalente), 100 g Xylol und 400 g anhydridfunktionelles Copolymer 5a) (1,0 Äquivalente) umgesetzt. Man erhält das Polyimidcopolymer 5b) als 43 %ige Lösung. Die Säurezahl beträgt 4. Das Polymer enthält 3,0 Gew.-% sekundäre Aminogruppen -NH- der in Beispiel 1 genannten Struktureinheit.

### Beispiel 6

7 g 1-Amino-2-propanol (0,5 Äquivalente), 8,2 g 1-Amino-3-(methylamino)-propan (0,5 Äquivalente), 252 g Solvent Naphtha und 300 g des in Beispiel 2a) beschriebenen, anhydridfunktionellen Copolymerisats werden nach dem in Beispiel 1b) beschriebenen Verfahren zu dem Polyimidpolymer 6b) umgesetzt. Dieses weist eine Säurezahl von 7 auf und fällt als 51 %ige Lösung an. Das Polymer enthält 0,7 Gew.-% sekundäre Aminogruppen -NH- in Form der in Beispiel 1 genannten Struktureinheiten und 0,8 Gew.-% an Hydroxylgruppen in Form von Struktureinheiten der Formel

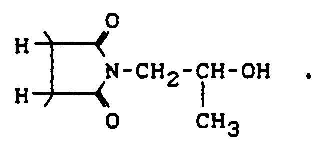

## Patentansprüche

1. Sekundäre Aminogruppen aufweisende Copolymerisate von olefinisch ungesättigten Verbindungen des Molekulargewichtsbereichs Mn 600 bis 20 000, gekennzeichnet durch einen Gehalt an sekundären Aminogruppen -NH- von 0,1 bis 6,0 Gew.-% in Form von in die Polymerkette eingebauten Struktureinheiten der Formel (I) 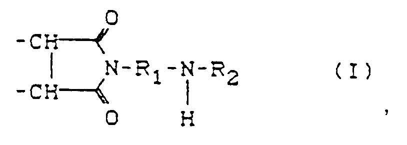 dadurch gekennzeichnet, daß sie durch Umsetzung von in der Polymerkette eingebaute intramolekulare Säureanhydridgruppen der Formel (III) 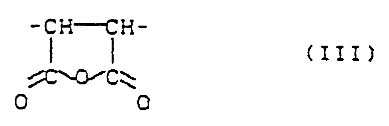 aufweisenden Copolymerisaten des Molekulargewichtsbereichs Mn 500 bis 18 000 eines Gemischs olefinisch ungesättigter Monomerer, bestehend aus
a) 1 bis 50 Gew.-Teilen anhydridfunktioneller Monomerer,
b) 1 bis 75 Gew.-Teilen Monomerer der Formel (IV) 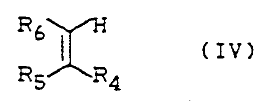
c) 15 bis 98 Gew.-Teilen Monomerer der Formel (V) 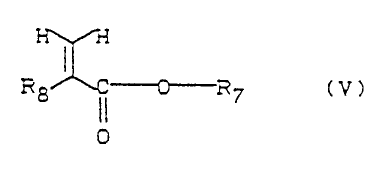 und
d) 0 bis 15 Gew. -Teilen mehrfach olefinisch ungesättigter Monomerer,
mit primär-sekundären Diaminen der Formel (VI)
H₂N-R₁-NH-R₂ (VI)
oder Gemischen derartiger Diamine mit bis zu 50 Mol-%, bezogen auf Gemisch, an Aminoalkoholen der Formel (VII)
H₂N-R₃-OH (VII)
unter Imidbildung bei 100 bis 200° C unter Einhaltung eines Äquivalentverhältnisses von primären Aminogruppen zu Säureanhydridgruppen von 1 : 1 bis 2 : 1 erhältlich sind, wobei
R₁ für einen gesättigten aliphatischen Kohlenwasserstoffrest mit 2 bis 6 Kohlenstoffatomen steht, mit der Maßgabe, daß zwischen den beiden Stickstoffatomen mindestens 2 Kohlenstoffatome angeordnet sind,
R₂ für eine Methyl-, Ethyl- oder 2-Hydroxyethylgruppe steht,
R₃ für einen gesättigten Kohlenwasserstoffrest mit 2 bis 6 Kohlenstoffatomen steht,
R₄ für Wasserstoff, eine Methylgruppe oder für Chlor oder Fluor steht,
R₅ für einen aromatischen Kohlenwasserstoffrest mit 6 bis 12 Kohlensfoffatomen, Chlor, Fluor oder eine Nitrilgruppe steht oder zusammen mit R₆ und den beiden Kohlenstoffatomen einen olefinisch ungesättigten cycloaliphatischen Kohlenwasserstoffring mit 5 oder 6 Kohlenstoffatomen bildet.
R₆ für Wasserstoff steht oder zusammen mit R₅ und den beiden Kohlenstoffatomen einen olefinisch ungesättigten cycloaliphatischen Kohlenwasserstoffring mit 5 oder 6 Kohlenstoffatomen bildet,
R₇ für einen aliphatischen oder cycloaliphatischen, gegebenenfalls Sauerstoff oder Stickstoff als Heteroatome enthaltenden Kohlenwasserstoffrest mit 1 bis 18 Kohlenstoffatomen steht, der gegebenenfalls Hydroxylgruppen als Substituenten aufweisen kann und
R₈ für Wasserstoff oder eine Methylgruppe steht.

2. Sekundäre Aminogruppen aufweisende Copolymerisate gemäß Anspruch 1, dadurch gekennzeichnet, daß sie zusätzlich zu den sekundären Aminogruppen und zu den gegebenenfalls im Rest R₂ vorliegenden Hydroxylgruppen 0,1 bis 2,5 Gew.-% an Hydroxylgruppen in Form von Struktureinheiten der Formel (II) 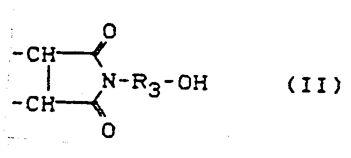 aufweisen, wobei R₃ die in Anspruch 1 genannte Bedeutung hat.

3. Verfahren zur Herstellung von sekundäre Aminogruppen und gegebenenfalls Hydroxylgruppen aufweisenden Copolymerisaten gemäß Anspruch 1 und 2, dadurch gekennzeichnet, daß man in der Polymerkette eingebaute intramolekulare Säureanhydridgruppen der Formel (III) 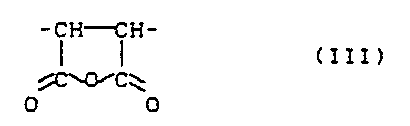 aufweisenden Copolymerisaten des Molekulargewichtsbereichs Mn 500 bis 18 000 eines Gemischs olefinisch ungesättigter Monomerer, bestehend aus
a) 1 bis 50 Gew.-Teilen anhydridfunktioneller Monomerer,
b) 1 bis 75 Gew.-Teilen Monomerer der Formel (IV) 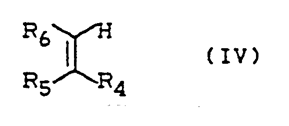
c) 15 bis 98 Gew.-Teilen Monomerer der Formel (V) 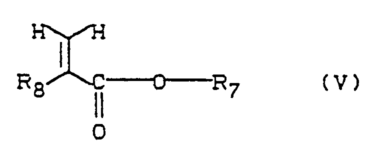 und
d) 0 bis 15 Gew.-Teilen mehrfach olefinisch ungesättigter Monomerer,
mit primär-sekundären Diaminen der Formel (VI)
H₂N-R₁-NH-R₂ (VI)
oder Gemischen derartiger Diamine mit bis zu 50 Mol-%, bezogen auf Gemisch, an Aminoalkoholen der Formel (VII)
H₂N-R₃-OH (VII)
unter Imidbildung bei 100 bis 200°C zur Reaktion bringt und gleichzeitig und/oder anschließend das Reaktionswasser azeotrop abdestilliert, wobei
das Äquivalentverhältnis von primären Aminogruppen zu Säureanhydridgruppen bei 1 : 1 bis 2 : 1 gehalten wird und R₁, R₂, R₃, R₄, R₅, R₆, R₇ und R₈ die in Anspruch 1 genannte Bedeutung haben.

4. Verfahren gemäß Anspruch 3, dadurch gekennzeichnet, daß man eine Lösung der primär-sekundären Diamine und gegebenenfalls der Aminoalkohole in einem inerten Lösungsmittel auf eine Temperatur von mindestens 100°C erhitzt, das ebenfalls in einem inerten Lösungsmittel gelöste anhydridfunktionelle Copolymerisat zu dieser Lösung zudosiert, das Reaktionswasser gleichzeitig oder anschließend abdestilliert und die Umsetzung bei Erreichen einer unter 25 liegenden Säurezahl beendet.

5. Verfahren gemäß Anspruch 3 und 4, dadurch gekennzeichnet, daß man solche Copolymerisate aus olefinisch ungesättigten Verbindungen verwendet, die durch Copolymerisation von 5 bis 40 Gew.-Teilen Monomerer a), 3 bis 60 Gew.-Teilen Monomerer b), 25 bis 85 Gew.-Teilen Monomerer c) und 0 bis 5 Gew.-Teilen Monomerer d) erhältlich sind, wobei
R₄ für Wasserstoff oder eine Methylgruppe steht,
R₅ für einen Phenylrest steht,
R₆ für Wasserstoff steht,
R₇ für einen aliphatischen Kohlenwasserstoffrest mit 1 bis 18 Kohlenstoffatomen steht, und
R₈ für Wasserstoff oder eine Methylgruppe steht.

6. Verfahren gemäß Anspruch 5, dadurch gekennzeichnet, daß man solche Copolymerisate verwendet, die durch Copolymerisation von 10 bis 25 Gew.-Teilen Monomerer a), 5 bis 50 Gew.-Teilen Monomerer b), 30 bis 75 Gew.-Teilen Monomerer c) und 0 bis 5 Gew.-Teilen Monomerer d) erhältlich sind.

7. Verwendung der sekundäre Aminogruppen und gegebenenfalls Hydroxylgruppen aufweisenden Copolymerisate gemäß Anspruch 1 und 2 als Bindemittel oder Bindemittelkomponente für Beschichtungsmittel, Dichtmassen, Klebstoffen oder Druckfarben.

## Claims

1. Copolymers containing secondary amino groups of olefinically unsaturated compounds having a molecular weight Mn in the range from 600 to 20,000, characterized by a content of secondary amino groups -NH- of 0.1 to 6.0% by weight in the form of structural units incorporated in the polymer chain corresponding to formula (I): 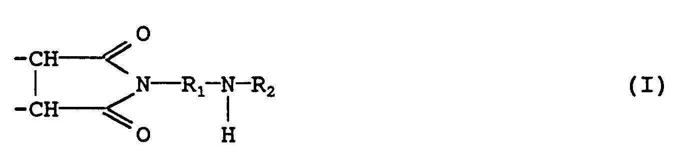 characterized in that they are obtainable by reaction of copolymers, which contain intramolecular anhydride groups incorporated in the polymer chain corresponding to formula (III): 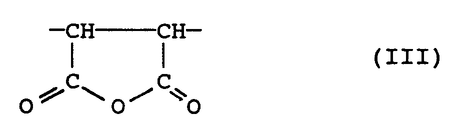 and which have a molecular weight Mn in the range from 500 to 18,000, of a mixture of olefinically unsaturated monomers consisting of
a) 1 to 50 parts by weight anhydride-functional monomers,
b) 1 to 75 parts by weight monomers corresponding to formula (IV) 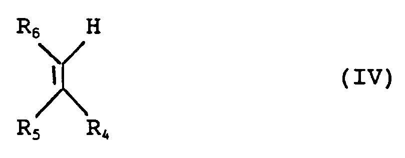
c) 15 to 98 parts by weight monomers corresponding to formula (V) 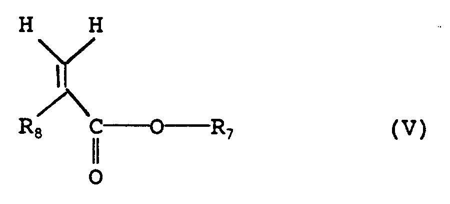 and
d) 0 to 15 parts by weight polyolefinically unsaturated monomers,
with primary/secondary diamines corresponding to formula (VI):
H₂N-R₁-NH-R₂ (VI)
or with mixtures of such diamines with up to 50 mol-%, based on the mixture, of aminoalcohols corresponding to formula (VII):
H₂N-R₃-OH (VII)
with imide formation at 100 to 200°C, the equivalent ratio of primary amino groups to anhydride groups being kept at 1:1 to 2:1; in the above formulae,
R₁ is a saturated aliphatic hydrocarbon radical containing 2 to 6 carbon atoms, with the proviso that at least two carbon atoms are arranged between the two nitrogen atoms,
R₂ is a methyl, ethyl or 2-hydroxyethyl group,
R₃ is a saturated hydrocarbon radical containing 2 to 6 carbon atoms,
R₄ is hydrogen, a methyl group or chlorine or fluorine,
R₅ is an aromatic hydrocarbon radical containing 6 to 12 carbon atoms, chlorine, fluorine or, together with R₆ and the two carbon atoms, forms an olefinically unsaturated cycloaliphatic hydrocarbon ring containing 5 or 6 carbon atoms,
R₆ is hydrogen or, together with R₅ and the two carbon atoms, forms a cycloaliphatic hydrocarbon ring containing 5 or 6 carbon atoms,
R₇ is an aliphatic or cycloaliphatic C₁₋₁₈ hydrocarbon radical which may optionally contain oxygen or nitrogen as heteroatoms and which may optionally bear hydroxyl groups as substituents and
R₈ is hydrogen or a methyl group.

2. Copolymers containing secondary amino groups as claimed in claim 1, characterized in that, in addition to the secondary amino groups and the hydroxyl groups optionally present in the substituent R₂, they contain 0.1 to 2.5% by weight of hydroxyl groups in the form of structural units corresponding to formula (II): 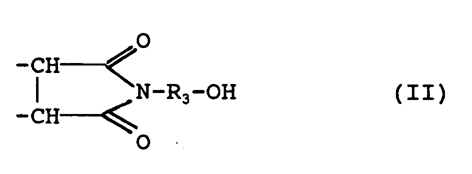 in which
R₃ is as defined in claim 1.

3. A process for the production of the copolymers containing secondary amino groups and optionally hydroxyl groups claimed in claims 1 and 2, characterized in that copolymers, which contain intramolecular acid anhydride groups incorporated in the polymer chain corresponding to formula (III): 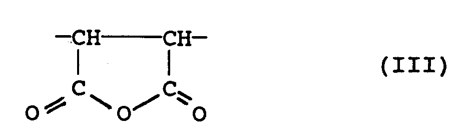 and which have a molecular weight Mn in the range from 500 to 18,000, of a mixture of olefinically unsaturated monomers consisting of
a) 1 to 50 parts by weight anhydride-functional monomers,
b) 1 to 75 parts by weight monomers corresponding to formula (IV) 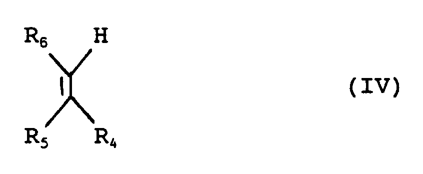
c) 15 to 98 parts by weight monomers corresponding to formula (V) 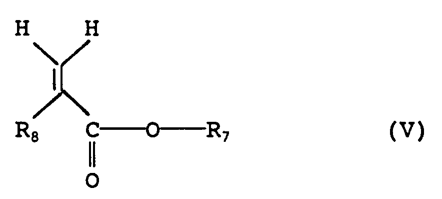 and
d) 0 to 15 parts by weight polyolefinically unsaturated monomers,
are reacted with primary/secondary diamines corresponding to formula (VI):
H₂N-R₁-NH-R₂ (VI)
or with mixtures of such diamines with up to 50 mol-%, based on the mixture, of aminoalcohols corresponding to formula (VII):
H₂N-R₃-OH (VII)
with imide formation at 100 to 200°C and the water of reaction is azeotropically distilled off at the same time or subsequently, the equivalent ratio of primary amino groups to anhydride groups being kept at 1:1 to 2:1 and R₁, R₂, R₃, R₄, R₅, R₆, R₇ and R₈ having the meanings defined in claim 1.

4. A process as claimed in claim 3, characterized in that a solution of the primary-secondary diamines and, optionally, the amino alcohols in an inert solvent is heated to a temperature of at least 100°C, the anhydride-functional copolymer which is also dissolved in an inert solvent, is added to the resulting solution, the water of reaction is distilled off at the same time or subsequently and the reaction is terminated on reaching an acid value below 25.

5. A process as claimed in claims 3 and 4, characterized in that the copolymers of olefinically unsaturated compounds used are obtainable by copolymerization of 5 to 40 parts by weight monomers a), 3 to 60 parts by weight of monomers b), 25 to 85 parts by weight of monomers c) and 0 to 5 parts by weight of monomers d),
R₄ being hydrogen or a methyl group,
R₅ being a phenyl radical,
R₆ being hydrogen,
R₇ being an aliphatic hydrocarbon radical containing 1 to 18 carbon atoms and
R₈ being hydrogen or a methyl group.

6. A process as claimed in claim 5, characterized in that the copolymers used are obtainable by copolymerization of 10 to 25 parts by weight of monomers a), 5 to 50 parts by weight of monomers b), 30 to 75 parts by weight of monomers c) and 0 to 5 parts by weight of monomers d).

7. The use of the copolymers containing secondary amino groups and optionally hydroxyl groups claimed in claims 1 and 2 as a binder or binder component for coating compositions, sealing compounds, adhesives or printing inks.

## Revendications

1. Copolymères présentant des groupes amino secondaires, de composés à insaturation oléfinique du domaine de poids moléculaire Mn de 600 à 20.000, caractérisés par une teneur en groupes amino secondaires -NH- de 0,1 à 6,0% en poids sous forme d'unités de structure incorporées dans la chaîne polymère, répondant à la formule (I) 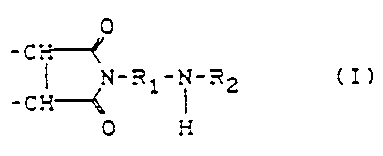 caractérisés par le fait qu'on les obtient par mise en réaction de copolymères présentant des groupes intramoléculaires d'anhydrides d'acides incorporés dans la chaîne polymère, répondant à la formule (III) 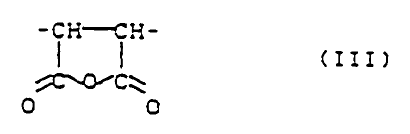 du domaine de poids moléculaire Mn de 500 à 18.000, d'un mélange de monomères à insaturation oléfinique constitué par
a) de 1 à 50 parties en poids de monomères à fonctionnalité anhydride,
b) de 1 à 75 parties en poids de monomères répondant à la formule (IV) 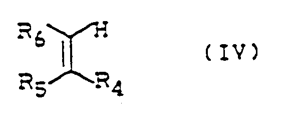
c) de 15 à 98 parties en poids de monomères répondant à la formule (V) 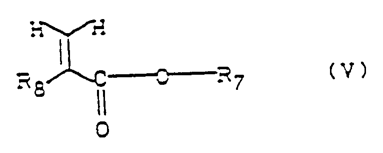 et
d) de 0 à 15 parties en poids de monomères plusieurs fois insaturés par voie oléfinique,
avec des diamines primaires-secondaires répondant à la formule (VI)
H₂N-R₁-NH-R₂ (VI)
ou encore avec des mélanges de diamines de ce type avec, jusqu'à concurrence de 50 moles % rapportées au mélange, des amino-alcools de formule (VII)
H₂N-R₃-OH (VII)
avec formation d'imide à une température de 100 à 200°C, tout en maintenant un rapport d'équivalent des groupes amino primaires aux groupes d'anhydrides d'acides de 1:1 à 2:1, où
R₁ représente un radical d'hydrocarbure aliphatique saturé contenant de 2 à 6 atomes de carbone, avec cette mesure qu'entre les deux atomes d'azote, sont disposés au moins deux atomes de carbone,
R₂ représente un groupe méthyle, un groupe éthyle ou un groupe 2-hydroxyéthyle,
R₃ représente un radical d'hydrocarbure saturé contenant de 2 à 6 atomes de carbone,
R₄ représente un atome d'hydrogène, un groupe méthyle ou encore un atome de chlore ou un atome de fluor,
R₅ représente un radical d'hydrocarbure aromatique contenant de 6 à 12 atomes de carbone, un atome de chlore, un atome de fluor ou encore un groupe nitrile, ou bien forme, conjointement avec R₆ et les deux atomes de carbone, un noyau d'hydrocarbure cycloaliphatique à insaturation oléfinique contenant 5 ou 6 atomes de carbone,
R₆ représente un atome d'hydrogène ou bien forme, conjointement avec R₅ et les deux atomes de carbone, un noyau d'hydrocarbure cycloaliphatique à insaturation oléfinique contenant 5 ou 6 atomes de carbone,
R₇ représente un radical d'hydrocarbure aliphatique ou cycloaliphatique contenant éventuellement, comme hétéroatomes, un atome d'oxygène ou un atome d'azote, et contenant de 1 à 18 atomes de carbone, qui peut éventuellement présenter des groupes hydroxyle à titre de substituants, et
R₈ représente un atome d'hydrogène ou un groupe méthyle.

2. Copolymères présentant des groupes amino secondaires selon la revendication 1, caractérisés en ce que, en plus des groupes amino secondaires et des groupes hydroxyle éventuellement présents dans le radical R₂, ils présentent de 0,1 à 2,5% en poids de groupes hydroxyle sous forme d'unités de structure répondant à la formule (II) 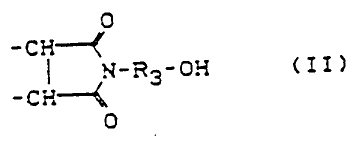 dans laquelle R₃ a la signification indiquée à la revendication 1.

3. Procédé pour la préparation de copolymères présentant des groupes amino secondaires et éventuellement des groupes hydroxyle selon les revendications 1 et 2, caractérisé en ce qu'on amène à réagir des copolymères présentant des groupes intramoléculaires d'anhydrides d'acides incorporés dans la chaîne polymère, répondant à la formule (III) 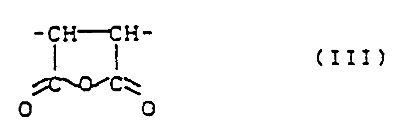 du domaine de poids moléculaire Mn de 500 à 18.000, d'un mélange de monomères à insaturation oléfinique constitué par
a) de 1 à 50 parties en poids de monomères à fonctionnalité anhydride,
b) de 1 à 75 parties en poids de monomères répondant à la formule (IV) 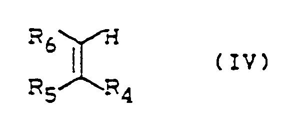
c) de 15 à 98 parties en poids de monomères répondant à la formule (V) 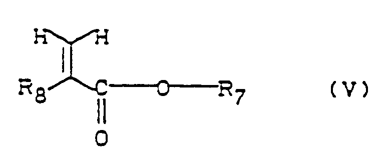 et
d) de 0 à 15 parties en poids de monomères plusieurs fois insaturés par voie oléfinique,
avec des diamines primaires-secondaires répondant à la formule (VI)
H₂N-R₁-NH-R₂ (VI)
ou encore avec des mélanges de diamines de ce type avec, jusqu'à concurrence de 50 moles % rapportées au mélange, des amino-alcools de formule (VII)
H₂N-R₃-OH (VII)
avec formation d'imide à une température de 100 à 200°C, et on élimine par distillation azéotrope l'eau réactionnelle simultanément et/ou ultérieurement, dans lequel on maintient le rapport d'équivalent des groupes amino primaires aux groupes d'anhydrides d'acides de 1:1 à 2:1, et R₁, R₂, R₃, R₄, R₅, R₆, R₇ et R₈ ont la signification indiquée à la revendication 1.

4. Procédé selon la revendication 3, caractérisé en ce qu'on chauffe une solution des diamines primaires-secondaires et éventuellement des aminoalcools dans un solvant inerte à une température d'au moins 100°C, on ajoute de manière dosée à cette solution le copolymère à fonctionnalité anhydride également dissous dans un solvant inerte, on élimine par distillation l'eau réactionnelle simultanément ou ultérieurement et on met un terme à la mise en réaction lorsqu'on atteint un indice d'acide inférieur à 25.

5. Procédé selon les revendications 3 et 4, caractérisé en ce qu'on utilise des copolymères de composés à insaturation oléfinique, que l'on obtient par copolymérisation de 5 à 40 parties en poids du monomère a), de 3 à 60 parties en poids du monomère b), de 25 à 85 parties en poids du monomère c) et de 0 à 5 parties en poids du monomère d), dans lequel
R₄ représente un atome d'hydrogène ou un groupe méthyle,
R₅ représente un radical phényle,
R₆ représente un atome d'hydrogène,
R₇ représente un radical d'hydrocarbure aliphatique contenant de 1 à 18 atomes de carbone, et
R₈ représente un atome d'hydrogène ou un groupe méthyle.

6. Procédé selon la revendication 5, caractérisé en ce qu'on utilise des copolymères que l'on obtient par copolymérisation de 10 à 25 parties en poids du monomère a), de 5 à 50 parties en poids du monomère b), de 30 à 75 parties en poids du monomère c) et de 0 à 5 parties en poids du monomère d).

7. Utilisation des copolymères présentant des groupes amino secondaires et éventuellement des groupes hydroxyle, selon les revendications 1 et 2, comme liants ou comme composants de liants pour des agents d'enduction, des matières d'étanchéification, des adhésifs ou des encres d'imprimerie.
